(19) Europäisches Patentamt
European Patent Office
Office européen des brevets

(11) **EP 4 439 388 A2**

(12) **EUROPEAN PATENT APPLICATION**

(43) Date of publication:
02.10.2024 Bulletin 2024/40

(21) Application number: 24166561.1

(22) Date of filing: 26.03.2024

(51) International Patent Classification (IPC):
*G06N 3/0464* (2023.01)   *G06N 3/048* (2023.01)
*G06N 3/063* (2023.01)

(52) Cooperative Patent Classification (CPC):
**G06N 3/048; G06N 3/0464; G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.03.2023 GB 202304472

(71) Applicant: **Imagination Technologies Limited
Kings Langley
Hertfordshire WD4 8LZ (GB)**

(72) Inventors:
• **AHMADI, Aria
London (GB)**
• **DIKICI, Cagatay
London (GB)**

(74) Representative: **Elkington and Fife LLP
Prospect House
8 Pembroke Road
Sevenoaks, Kent TN13 1XR (GB)**

(54) **A METHOD AND DATA PROCESSING SYSTEM FOR RESAMPLING A SET OF SAMPLES**

(57) A method and data processing system are disclosed for resampling a first set of samples. The method comprises convolving a series of kernels with the first set of samples, and performing a depth-to-space operation on the tensor outputs of the convolutions. The convolutions and depth-to-space operation are implemented in fixed function circuitry in a network accelerator.

FIGURE 1

**EP 4 439 388 A2**

**Description**

CROSS-REFERENCE TO RELATED APPLICATION

This application claims priority from UK patent application 2304472.0 filed on 27 March 2023, which is herein incorporated by reference in its entirety.

TECHNICAL FIELD

The present invention relates to data processing, and in particular to the resampling of samples using neural network accelerators.

BACKGROUND

A sample is a datapoint located at given coordinates in a coordinate system. For example, in a one-dimensional coordinate system, a sample $s$ has a value $s(x)$ at coordinate $(x)$. More generally, in higher dimensions a sample $s$ will have a value $s(x, y \ldots)$ at coordinates $(x, y \ldots)$. A set of samples is referred to using the notation $S(X)$. An example of a set of samples in two dimensions is an image. Each pixel in the image is a datapoint (for example, a luminance value in a black and white image) located at a specific pair of $x, y$ coordinates.

Resampling is the act of creating new samples $S_{out}$ (referred to as a second set of samples) based on a set of input samples $S_{in}$ (referred to as a first set of samples). The first set of samples contains samples having values $S_{in}(X_{in})$ at coordinates $X_{in}$ defined in a first coordinate system $C_{in}$. The second set of samples $S_{out}$ contains samples having values $S_{out}(X_{out})$ at coordinates $X_{out}$ defined in a second coordinate system $C_{out}$. The coordinates $X_{out}$ of the second set of samples are defined as follows:

$$X_{out} = \left( X_{out}^x, X_{out}^y, \ldots \right) = \left( (x_i)_{i=0}^{\alpha W - 1} = i, (y_j)_{j=0}^{\alpha H - 1} = j, \ldots \right)$$

Where $\alpha$ is a resampling parameter, which will be explained in more detail below. The number of samples in the second set of samples depends on $\alpha$ and the height $H$ and width $W$ of the first set of samples.

The aim of resampling is to create the second set of samples by interpolating values at coordinates $X_{out}^{proj}$ in the first coordinate system $C_{in}$ and then arranging these values according to the coordinates $X_{out}$. In this way, the interpolated values become the values of the second set of samples $S_{out}$. The coordinates $X_{out}^{proj}$ define the positions of sampling locations in the first coordinate system.

The coordinates $X_{out}^{proj}$ are the coordinates of the second set of samples $X_{out}$ (defined in the second coordinate system $C_{out}$) as projected into the first coordinate system $C_{in}$. The relationship between coordinates $X_{out}$ and $X_{out}^{proj}$ is as follows:

$$X_{out}^{proj} = \frac{X_{out}}{\alpha} + d = \left( (x_{*i})_{i=0}^{\alpha W - 1} = \frac{i}{\alpha} + d, (y_{*j})_{j=0}^{\alpha H - 1} = \frac{j}{\alpha} + d, \ldots \right)$$

Where $d$ is an offset parameter. Note the use of the asterisk '*' on the X and Y coordinates. This asterisk denotes that these coordinates are for the first coordinate system. $X_{out}^{proj}$ depends on the resampling parameter $\alpha$. For example, where $\alpha = 2$ and $d = 0$ (that is, the first set of samples is upsampled by a factor of two) the projection of coordinates $X_{out}$

= (1, 1) is $X^{proj}_{out} =$ (0.5, 0.5). The values $S_{out}$ of the second set of samples are the values interpolated at the locations $X^{proj}_{out}$ in the first coordinate system. Expressed mathematically:

$$S_{out}(X_{out}) = S_{in}(X^{proj}_{out}) = I(S_{in}, X^{proj}_{out})$$

Where the function $I(\ ,\ )$ represents an interpolation operation that receives as an input (a set of) sample(s) and coordinates for sampling locations, and that calculates the value a new sample would have at those coordinates.

One example of a resampling operation is upsampling. Upsampling takes a first set of samples having a first sampling rate (a frequency of samples in space or time) and creates a second set of samples based on the first set of samples, the second set of samples having a higher sampling rate that the first set of samples (and so containing more samples). Upsampling occurs when $\alpha$ is larger than 1. For example, by determining a value between each neighbouring pair of samples in a measurement of a signal, an upsampled measurement can be created that approximates a measurement of the signal made at twice the original sampling rate. This upsampled measurement contains twice the number of samples when compared to the original measurement of the signal, and the original measurement of the signal is said to have been upsampled by a factor of two (i.e., $\alpha$ = 2). As mentioned above, the values of the new samples can be determined using interpolation. Depending on the type of interpolation used, the new samples will have different values. Upsampling is used in many types of signal processing. In one example, upsampling is used to increase the resolution of an image.

Downsampling is another type of resampling operation and has the opposite effect to upsampling. Downsampling occurs when $\alpha$ is a positive number smaller than 1. Downsampling takes a first set of samples having a first sampling rate and creates a second set of samples having a second, lower, sampling rate. Consequently, the second set of samples contains fewer samples than the original set of samples. Downsampling can be useful because it reduces the size in memory of a set of samples, and the bandwidth required to process the set of samples.

Using upsampling to generate a second set of samples that contains an integer multiple of the number of samples in the first set of samples is referred to as integer upsampling. Using downsampling to generate a second set of samples that contains a unit fraction of the number of samples in the first set of samples is referred to as integer downsampling. A set of samples can also be upsampled or downsampled by a non-integer factor, which is referred to as fractional upsampling or fractional downsampling, respectively. For example, to change the resolution of a video frame 3 between 720p and 1080p, the 720p frame must be upsampled by a factor $\alpha$ of $\dfrac{3}{2}$ (or the 1080p frame must be downsampled by a factor $\alpha$ of $\dfrac{2}{3}$ ) in the vertical dimension.

Another form of resampling, referred to herein as "offset resampling" seeks to generate a second set of samples that has the same sampling rate as the first set of samples, but that has samples offset in at least one dimension. In the example of an image, offset resampling may be used to generate an image with samples offset spatially. In the example of audio data, offset resampling may be used to generate samples offset temporally. Offset resampling occurs when $\alpha$ = 0 and $d \neq 0$.

Fractional upsampling or downsampling can be performed by a "downsampling-first method", in which the first set of samples is first downsampled by a factor $b$ to produce an intermediate set of values, and then the intermediate set of values is upsampled by a factor $\alpha$. Alternatively, an "upsampling-first method" can be used, in which the first set of samples is first upsampled by a factor $\alpha$, and the resulting intermediate set of values is then downsampled by a factor $b$.

Existing methods of performing fractional upsampling, fractional downsampling, and offset resampling have a number of problems. Upsampling inherently produces more values than were present in the first set of samples. As a result, any processing operation that is performed on the intermediate values produced by the upsampling, such as the downsampling step in the upsampling-first method, requires more memory, bandwidth and computational resources than if the operation had been performed on the first set of samples. Furthermore, still considering the upsampling-first method, a portion of the intermediate values produced by the upsampling step is discarded in the subsequent downsampling step, meaning that the computational resources spent calculating those values were wasted. For these reasons, the upsampling-first method is computationally inefficient, when compared with the down-sampling first method.

Downsampling inherently produces fewer values than were present in the first set of samples. As a result, the memory and bandwidth requirements of the downsampling-first method are reduced compared with the upsampling first method because the initial downsampling step reduces the number of values that need to be stored and then processed in the subsequent upsampling step. However, the subsequent upsampling step has fewer values on which to base the upsampling, due to the loss of data inherent to the downsampling process. This means that the second set of samples produced by the upsampling step is less likely to be accurate, and the output of the downsampling-first method is of a lower quality than the corresponding output of the upsampling-first method.

In addition to the problems identified above, while both the upsampling-first method and the downsampling-first method can be implemented in a neural network, neither method can be processed in a single pass through an exemplary neural network accelerator.

It would be desirable to find a method of implementing fractional upsampling and downsampling that maintained a high final signal quality without large bandwidth requirements, and that could be executed in a single pass through an exemplary neural network accelerator. It would also be desirable to find an efficient method of implementing offset resampling using a neural network accelerator.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method and data processing system are disclosed for resampling a first set of samples. The method comprises convolving a series of kernels with the first set of samples, and performing a depth-to-space operation on the tensor outputs of the convolutions. The convolutions and depth-to-space operation are implemented in fixed function circuitry in a network accelerator.

According to one aspect, there is provided a method of resampling a first set of samples using a neural network accelerator comprising fixed function hardware. The method comprises:

receiving the first set of samples, wherein the first set of samples is arranged in a tensor extending in at least a first dimension defined in a first coordinate system;

determining a set of resampling parameters, the set of resampling parameters comprising:

a first resampling factor $\dfrac{a_1}{b_1}$ for the first dimension; and

a first offset $d_1$ for the first dimension;

obtaining at least a first number of kernels; and

resampling the first set of samples to produce a second set of samples, based on the first resampling factor and the first offset,

wherein:

$a_1$ and $b_1$ are integers greater than 0;

resampling the first set of samples comprises:

convolving the first set of samples with the kernels to produce a corresponding first number of output tensors comprising a set of values, wherein the first number is an integer greater than 1; and

arranging the set of values to produce the second set of samples, wherein the arranging comprises performing a depth-to-space operation on the output tensors,

the convolutions traverse the first dimension;

the second set of samples is offset relative to the first set of samples in the first dimension by $d_1$;

the convolutions and depth-to-space operation are performed by the fixed function hardware; and

at least one of the following is true:

(A) $a_1$ does not equal $b_1$, and the convolutions are performed with a first stride in the first dimension that is greater than 1; and

(B) $d_1$ is not equal to 0

By "extending in at least a first dimension", it is meant that the tensor has a size greater than one in at least a first dimension. Arranging the second set of samples may comprise concatenating the output tensors in the depth dimension.

One or more convolution engines may perform the convolution operations, and one or more memory manipulation modules may perform the depth-to-space operation. Each of the kernels may be configured for determining different samples in the second set of samples when it is convolved with the first set of samples. By "depth-to-space operation", it is meant an operation that transforms a set of values by re-arranging values from the depth dimension (also known as the channel dimension $C$) into one or more of the spatial dimensions (the height $H$ and width $W$ dimensions). This operation increases the size of the one or more spatial dimensions while reducing the size of the depth dimension. For example, a tensor could have dimensions [$C, H, W$] of [2, 3, 3], meaning that the tensor has two channels each containing three rows and three columns of data. This tensor could be transformed through a depth-to-space operation into a tensor having dimensions [1, 6, 3] (that is, a single channel containing six rows and three columns of data).

The first number (of kernels) may be greater than or equal to $a_1$. $a_1$ and $b_1$ may have a greatest common divisor of 1. $a_1$ and $b_1$ may each be greater than 1.

The kernels may be obtained from a memory, or may be generated at runtime. The memory may store a plurality of sets of kernels, each set of kernels containing pre-determined kernels generated for a given set of resampling parameters. The plurality of sets of kernels may include sets of kernels for one-dimensional resampling, two-dimensional resampling, or 2+ dimensional resampling. Obtaining the kernels may comprise selecting the set of kernels generated for the received resampling parameters.

Determining the set of resampling parameters may comprise receiving the resampling factor (alone) and determining that a default offset of zero should be used or receiving a non-zero offset (alone) and determining that a default resampling factor of one should be used.

Obtaining the kernels may comprise: defining a subset of sampling locations comprising $a_1$ sampling locations; and generating the kernels $(K_i)_{i=0}^{a_1-1}$, wherein the first number of kernels is greater than or equal to $a_1$, and wherein each kernel is configured for interpolating a value at a different one of the subset of sampling location. Defining the subset of sampling locations may comprise: determining X coordinates $(x_i)_{i=0}^{a_1-1}$ for a subset of the second set of samples, wherein the X coordinates define positions in the first dimension of a second coordinate system of the subset of the second set of samples, and wherein the subset of the second set of samples comprises $a_1$ samples; and projecting the X coordinates into the first coordinate system to define X coordinates of the subset of sampling locations in the first coordinate system.

The $a_1$ samples of the subset of the second set of samples may be the first $a_1$ consecutive samples in the first dimension. The $a_1$ samples may be any $a_1$ consecutive samples in the first dimension. In some cases, the $a_1$ samples might not be consecutive Each of the $a_1$ samples may have X coordinate values that differ from the X coordinate values of each of the other $a_1$ samples by a non-integer multiple of $a_1$.

The index "i" of each kernel $K_i$ matches the index of the respective sampling location for which that kernel was generated. For example, kernel $K_1$ is generated for the sampling location having X coordinate $x_1$. In other words, each kernel $K_i$ is generated for the sampling location $(x_i)_{i=0}^{a_1-1}$ having the same "i" index value as the kernel. When the kernel $K_1$ is convolved with the first set of samples, the output tensor resulting from that convolution comprises a value calculated for sampling location $x_1$. The same principle applies in two or more dimensions. For example, kernel $K_{1,j}$ is generated for the sampling location having X coordinate $x_1$, irrespective of the value of index "j" and the corresponding coordinate in the second dimension. More generally, for a given value of index "j", the index "i" of each kernel $K_{i,j}$ matches the index "i" of the sampling location for which that kernel was generated. In other words, each kernel $K_{i,j}$ is generated for a sampling location having X coordinate $(x_i)_{i=0}^{a_1-1}$, where the "i" index value of the kernel and the X coordinate are the same. Similarly, kernel $K_{i,1}$ is generated for the sampling location having Y coordinate $y_1$, irrespective of the value of index "i" and the corresponding coordinate in the first dimension. More generally, for a given value of index "i", the index "j" of each kernel $K_{i,j}$ matches the index "j" of the sampling location for which that kernel was generated. In other words, each kernel $K_{i,j}$ is generated for a sampling location having Y coordinate $(y_i)_{i=0}^{a_2-1}$, where the "j" index value of the kernel and the Y coordinate are the same.

The subset of sampling locations defines a "unit cell" or smallest repeating unit of sampling locations that can be used to define all of the sampling locations at which a new sample should be calculated. In other words, there may be more sampling locations along the first dimension (also referred to as the X dimension) than those contained in the subset of sampling locations; however, these additional sampling locations can be represented in terms of one of the sampling locations in the subset of sampling locations. In particular, this is done using the relationship $x_{*i+\rho a1} = x_{*i} + \rho b_1$, where $p$ is an integer.

The X coordinates of the subset of the second set of samples can be projected into the first coordinate system using the following relationship: $X_{subset\ out}^{proj} = \frac{X_{subset\ out}}{a_1} + d_1$. The subset of the second set of samples may contain the first $a_1$ consecutive samples in the first dimension of the second coordinate system.

The subset of sampling locations may have X coordinates $(x_{*i})_{i=0}^{a_1-1} = \left(\frac{b_1}{a_1}\right)i + d_1$ in the first coordinate system.

The sampling locations may have a periodicity in the first dimension of $a_1$. For example, where $a_1 = 3$, X coordinate $X_{*4} = X_{*1+a1}$. Furthermore, the periodic sampling locations in the first dimension may have X coordinate values that differ by an integer multiple of $b_1$. By performing the convolutions with a stride of $b_1$, each convolution of a kernel $K_i$ can output a tensor comprising samples generated at periodic sampling locations. For example, by striding kernel $K_1$ across the first set of samples with a stride of $b_1$, the output tensor produced by the convolution of kernel $K_1$ with the first set of samples comprises samples determined for sampling locations $X_{*1}$, $X_{*1+a1}$, $X_{*1+2a1}$, $X_{*1+3a1}$ •••.

The first dimension may refer to a vertical, horizontal or depth dimension, or any other dimension. It should be understood that the term "X coordinate" is merely used as a label and does not necessarily reference a horizontal dimension.

Each of the kernels $K_i$ may comprise $b_1 + 1$ elements. The elements of the kernel $K_i$, for a given value of i, may have values of $(k_l)_{l=0}^{b_1} = (1 - |x_{*i} - l|)$, wherein $k_l$ is set to 0 where $|x_{*i} - l| > 1$.

The size of the kernels, a consequence of the requirement that each kernel comprises $(b_1 + 1)$ elements in the first dimension, ensures that, when each kernel is applied to the first set of samples, the kernel is large enough to encompass all of the elements of the first set of samples that should contribute to the value being calculated. In some examples, the kernels may contain more than $b_1 + 1$ elements. For example, where the first set of samples is two-dimensional the kernels may contain more than $b_1 + 1$ elements. In another example, the kernels may comprise a multiple of $b_1 + 1$ elements and the convolution operation may be performed with a stride that is the same multiple of $b_1$.

The method may further comprise increasing the size of the first set of samples in the first dimension by padding the first set of samples in the first dimension.

The first set of samples may be padded with one or more columns of samples, or padded with one or more rows of samples. Padding the edges of the first set of samples enables the convolutions to calculate values at sampling locations beyond the edge of the first set of samples, and at sampling locations close to the edge of the first set of samples where the kernel extends beyond the edge of the first set of samples. The padded samples may have a value of 0. For example, the padding may comprise inserting one or more rows of zeros, and/or one or more columns of zeros. In another example, the padding may comprise adding one or more rows that are duplicate samples of the first set of samples.

The padding may comprise inserting $n_x$ rows or columns of samples, where $n_x = \left\lceil \frac{size_x}{b_1} \right\rceil (b_1 - 1) + (b_1 + 1) - size_x$, where the variable "$size_x$" refers to the size of the first set of samples in the first dimension. In some examples, where the first dimension is the vertical dimension, the padding may comprise inserting $n_a$ rows of samples, where $n_a = \left\lceil \frac{H}{b_1} \right\rceil (b_1 - 1) + (b_1 + 1) - H$

, where $H$ is the height of the first set of samples. In some examples, where the first dimension is the horizontal dimension, the padding may comprise inserting $n_b$ columns of samples, where

$$n_b = \left\lceil \frac{W}{b_1} \right\rceil (b_1 - 1) + (b_1 + 1) - W$$

, where $W$ is the width of the first set of samples. More generally, the size of the first set of samples in the first dimension can be increased (by padding) by

$$n_x = \left\lceil \frac{size_x}{b_1} \right\rceil (b_1 - 1) + (b_1 + 1) - size_x$$
.

The first set of samples may extend in a second dimension defined in the first coordinate system. The resampling parameters may further comprise a second resampling factor $\dfrac{a_2}{b_2}$ for the second dimension and a second offset $d_2$ for the second dimension, where $a_2$ and $b_2$ are integers greater than 0. The convolutions may traverse the first dimension and the second dimension. The second set of samples may be offset from the first set of samples in the second dimension by $d_2$. At least one of the following may be true:

(A) $a_1$ does not equal $b_1$, and the convolutions are performed with a first stride in the first dimension that is greater than 1;
(B) $a_2$ does not equal $b_2$, and the convolutions are performed with a second stride in the second dimension that is greater than 1;
(C) $d_1$ is not equal to 0; and
(D) $d_2$ is not equal to 0.

The first set of samples may be a matrix, and the output tensors produced by the convolution operations may be matrices. $a_2$ and $b_2$ may have a greatest common divisor of 1. In some examples, $a_1$ may be equal to $a_2$, and/or $b_1$ may be equal to $b_2$. $a_1$ may be greater than $b_1$, and/or $a_2$ may be greater than $b_2$. Conversely, $b_1$ may be greater than $a_1$, and/or $b_2$ may be greater than $a_2$.

The first number may be greater than or equal to $a_1 \times a_2$. Each of the kernels may have a size in the first dimension of $(b_1 + 1)$ and a size in the second dimension of $(b_2 + 1)$.

The method may comprise padding a first edge of the first set of samples with one or more columns of samples; and/or padding a second edge of the first set of samples one or more rows of samples. In other words, the first set of samples may be padded in the first dimension and/or padded in the second dimension. The padding may increase the size of the first set of samples in the first dimension by at least

$$n_x = \left\lceil \frac{size_x}{b_1} \right\rceil (b_1 - 1) + (b_1 + 1) - size_x$$
. Similarly, the padding may to increase the size of the first set of samples in the second dimension by at least

$$n_y = \left\lceil \frac{size_y}{b_2} \right\rceil (b_2 - 1) + (b_2 + 1) - size_y$$
. The variable "$size_x$" refers to the size of the first set of samples in the X dimension, and the variable "$size_y$" refers to the size of the first set of samples in the Y dimension. In some examples, in which the first dimension is the horizontal dimension and the second dimension is the vertical dimension. The one or more rows of samples may comprise or consist of $n_r$ rows of samples, where

$$n_r = \left\lceil \frac{H}{b_2} \right\rceil (b_2 - 1) + (b_2 + 1) - H$$
, where H is the height of the first set of samples. In these examples, the one or more columns of samples may comprise or consist of $n_c$ columns of samples, where

$$n_c = \left\lceil \frac{W}{b_1} \right\rceil (b_1 - 1) + (b_1 + 1) - W$$
, where W is the width of the first set of samples. Each of the rows of samples may contain $W + n_c$ samples, where $W$ is the width of the first set of samples. Each of the columns of samples may contain $H + n_r$ samples, where $H$ is the height of the first set of samples.

Each kernel may have a size in the first dimension that is greater than or equal to both ($b_1 + 1$) and R, and a size in the second dimension that is greater than or equal to both ($b_2 + 1$) and R. R is equal to 1 when the resampling interpolates the second set of samples using nearest neighbour interpolation, R is equal to 2 when the resampling interpolates the second set of samples using bilinear interpolation, and R is equal to 4 when the resampling interpolates the second set of samples using bicubic interpolation.

The convolutions may be performed with a stride of $b_1$ in the first dimension and a stride of $b_2$ in the second dimension, where $b_1$ is greater than 1 and $b_2$ is greater than 1.

Performing the convolutions with a stride of $b_1$ in the first dimension and $b_2$ in the second dimension reduces (typically to zero) the number of samples in the output tensors that do not contribute to the second set of samples.

The first number of kernels may be equal to $a_1 \times a_2$. The depth-to-space operation may be performed with a stride of $a_1$ in the first dimension and a stride of $a_2$ in the second dimension.

Obtaining the kernels may comprise: defining a subset of sampling locations comprising at least $a_1 \times a_2$ sampling locations; and generating the kernels $(K_{i,j})_{i=0,j=0}^{a_1-1,a_2-1}$, wherein the first number of kernels is greater than or equal to $a_1 \times a_2$, and wherein each kernel is configured for interpolating a value at a different one of the subset of sampling locations. Defining the subset of sampling locations may comprise:

determining X coordinates $(x_i)_{i=0}^{a_1-1}$ for a first subset of the second set of samples, wherein the X coordinates define positions in the first dimension of a second coordinate system of the first subset of the second set of samples, and wherein the first subset of the second set of samples contains at least $a_1$ samples;

determining Y coordinates $(y_j)_{j=0}^{a_2-1}$ for a second subset of the second set of samples, wherein the Y coordinates define positions in a second dimension of the second coordinate system of the second subset of the second set of samples, and wherein the second subset of the second set of samples contains at least $a_2$ samples; and

projecting $a_1 \times a_2$ different combinations of the X and Y coordinates into the first coordinate system to define coordinates of the subset of sampling locations in the first coordinate system.

The first subset of the second set of samples and the second subset of the second set of samples may consist of the same samples. In other words, the first subset of the second set of samples and the second subset of the second set of samples may be the same. Alternatively, one or more (or all) of the samples in the first subset of the second set of samples may be different from the samples of the second subset of the second set of samples.

The at least $a_1$ samples of the first subset of the second set of samples may be the first consecutive samples in the first dimension. The at least $a_1$ samples may be any consecutive samples in the first dimension. The at least $a_2$ samples of the second subset of the second set of samples may be the first consecutive samples in the second dimension. The at least $a_2$ samples of the second subset of the second set of samples may be any consecutive in the second dimension. Alternatively, the samples may not be consecutive. The X coordinates of the at least $a_1$ samples may have values that differ by an integer value that is a non-integer multiple of $a_1$. The Y coordinates of the at least $a_2$ samples may have values that differ by an integer value that is a non-integer multiple of $a_2$.

The indices "i" and "j" of each kernel $K_{i,j}$ match the indices of the sampling location for which that kernel was generated. For example, kernel $K_{1,2}$ is generated for sampling location ($x_{*1}$, $y_{*2}$). In other words, each kernel $K_{i,j}$ is generated for the sampling location $(x_{*i}, y_{*j})_{i=0,j=0}^{a_1-1,\ a_2-1}$ having the same "i" and "j" index values as the kernel.

The $a_1$ X coordinates of the sampling locations in the subset of sampling locations may have values of

$$(x_{*i})_{i=0}^{a_1-1} = \left(\frac{b_1}{a_1}\right) i + d_1$$

; and the $a_2$ Y coordinates of the sampling locations in the subset of sampling locations may have values of

$$(y_{*j})_{j=0}^{a_2-1} = \left(\frac{b_2}{a_2}\right) j + d_2$$

. The sampling locations may have a periodicity in the first (X) dimension of $a_1$. Similarly, the sampling locations may have a periodicity in the second (Y) dimension of

$a_2$. For example, where $a_1$ = 3, the X coordinate $x_{*4} = x_{*1+a1}$. In other words, sampling location $(x_{*4}, y_{*j}) = (x_{*1+a1}, y_{*j})$. Similarly, in an example in which $a_2$ = 3, the Y coordinate $y_{*4} = y_{*1+a2}$, and sampling location $(x_{*i}, y_{*4}) = (x_{*i}, y_{*1+a2})$. Furthermore, the periodic sampling locations in the first dimension have X coordinate values that differ by an integer multiple of $b_1$. A corresponding relationship applies to the Y coordinates of sampling locations in the second dimension and $b_2$.

Each of the kernels may comprise $(b_1 + 1) \times (b_2 + 1)$ elements. The elements of the kernels $K_{i,j}$, for a given value of $i$ and a given value of $j$, may have values of

$$(k_{l,m})_{l=0,m=0}^{b_1,\,b_2} = (1 - |x_{*i} - l|) \times (1 - |y_{*j} - m|)$$ , wherein $k_{l,m}$ is set to 0 where $|x_{*i} - l| > 1$ and/or $|y_{*j} - m| > 1$.

The size of the kernels, a consequence of the requirement that each kernel has a size of at least $(b_1 + 1)$ in the first dimension and a size of at least $(b_2 + 1)$ in the second dimension, ensures that, when each kernel is applied to the first set of samples, it is large enough to encompass all of the elements of the first set of samples that should contribute to the value being calculated.

According to another aspect, there is provided a data processing system for resampling a first set of samples. The data processing system comprises:

> a neural network accelerator comprising fixed function circuitry configured to perform convolution operations and depth-to-space operations; and
> a controller, configured to:

>> receive the first set of samples, wherein the first set of samples is arranged in a tensor extending in at least a first dimension defined in a first coordinate system;
>> determine a set of resampling parameters, the set of resampling parameters comprising:

>>> a first resampling factor $\dfrac{a_1}{b_1}$ for the first dimension; and
>>> a first offset $d_1$ for the first dimension; and

>> obtain at least a first number of kernels;

> wherein the neural network accelerator is configured to:

>> resample the first set of samples to produce a second set of samples based on the first resampling factor and the first offset, the resampling comprising convolving the first set of samples with the kernels to produce a corresponding first number of output tensors comprising a set of values; and
>> arrange the set of values to produce the second set of samples, the arranging comprising performing a depth-to-space operation on the output tensors,

> wherein:

>> $a_1$ and $b_1$ are integers greater that 0;
>> the convolutions traverse the first dimension;
>> the second set of samples is offset from the first set of samples in the first dimension by $d_1$;
>> the first number is an integer greater than 1; and
>> at least one of the following is true:

>>> (A) $a_1$ does not equal $b_1$, and the convolutions are performed with a first stride in the first dimension that is greater than 1; and
>>> (B) $d_1$ is not equal to 0.

The neural network accelerator may comprise one or more convolution engines and one or more memory manipulation modules. The one or more convolution engines may be configured to convolve the first set of samples with the kernels. The one or more memory manipulation modules may be configured to perform the depth-to-space operation on the output tensors.

Arranging the values may comprise concatenating the output tensors in the depth dimension. The memory manipulation module may be configured to perform the concatenating.

The controller may be configured to: define a subset of sampling locations comprising $a_1$ sampling locations; and generate the kernels $(K_i)_{i=0}^{a_1-1}$, wherein the first number of kernels is greater than or equal to $a_1$, and wherein each kernel is configured for interpolating a value at a different one of the subset of sampling locations. Defining the set of sampling locations may comprise:

determining X coordinates $(x_i)_{i=0}^{a_1-1}$ for a subset of the second set of samples, wherein the X coordinates define positions in the first dimension of a second coordinate system of the subset of the second set of samples, and wherein the subset of the second set of samples comprises $a_1$ samples; and

projecting the X coordinates into the first coordinate system to define X coordinates of the subset of sampling locations in the first coordinate system.

The controller may be further configured to: pad the first set of samples with one or more columns of samples; or pad the first set of samples with one or more rows of samples.

The convolutions may be performed with a stride of $b_1$ in the first dimension, wherein $b_1$ is greater than 1.

Performing the convolutions with a stride of $b_1$ in the first dimensions reduces (typically to zero) the number of values in the output tensors that do not contribute to the second set of samples. In other words, the number of redundant calculations performed during the convolutions is reduced (typically to zero).

The depth-to-space operation may be performed with a stride of $a_1$ in the first dimension.

In a one-dimensional implementation (that is, an implementation in which the first set of samples extends only in the first dimension), using exactly $a_1$ kernels exploits the periodic nature of the locations of the second set of samples that results from the first resampling factor, and enables the entire second set of samples to be generated using only $a_1$ convolution operations.

Each of the kernels may have a size in the first dimension of at least $(b_1 + 1)$.

Each of the kernels may have a size in the first dimension equal to $(b_1 + 1)$. The "first dimension" here refers to the first dimension of the first coordinate system.

The resampling may interpolate the second set of samples using one of: nearest neighbour interpolation; bilinear interpolation; and bicubic interpolation.

Each kernel may have a size in the first dimension that is greater than or equal to both $(b_1 + 1)$ and R, wherein:

R is equal to 1 when the kernels are configured to interpolate the second set of samples using nearest neighbour interpolation;

R is equal to 2 when the kernels are configured to interpolate the second set of samples using bilinear interpolation; and

R is equal to 4 when the kernels are configured to interpolate the second set of samples using bicubic interpolation.

The resampling and the arranging may be performed in a single pass through the neural network accelerator.

The first set of samples may comprise one or more of: image data; volumetric data; and audio data.

The first set of samples may consist of one or more of image data; volumetric data; and audio data.

Also provided is a data processing system configured to perform a method as summarised above. The data processing system may be embodied in hardware on an integrated circuit.

Also provided is a method of manufacturing, using an integrated circuit manufacturing system, a data processing system as described above. The method of manufacturing may comprise: processing, using a layout processing system, a computer readable description of the data processing system so as to generate a circuit layout description of an integrated circuit embodying the data processing system; and manufacturing, using an integrated circuit generation system, the data processing system according to the circuit layout description.

Also provided is computer readable code configured to cause a method as summarised above to be performed when the code is run.

Also provided is a computer readable storage medium (optionally non-transitory) having encoded thereon the computer readable code.

Also provided is an integrated circuit definition dataset that, when processed in an integrated circuit manufacturing system, configures the integrated circuit manufacturing system to manufacture a data processing system as described above.

Also provided is a computer readable storage medium (optionally non-transitory) having stored thereon a computer readable description of a data processing system as described above that, when processed in an integrated circuit manufacturing system, causes the integrated circuit manufacturing system to manufacture an integrated circuit embodying the data processing system.

Also provided is a computer readable storage medium (optionally non-transitory) having stored thereon a computer readable description of a data processing system as above which, when processed in an integrated circuit manufacturing system, causes the integrated circuit manufacturing system to: process, using a layout processing system, the computer readable description of the data processing system so as to generate a circuit layout description of an integrated circuit embodying the data processing system; and manufacture, using an integrated circuit generation system, the data processing system according to the circuit layout description.

Also provided is an integrated circuit manufacturing system configured to manufacture a data processing system as summarised above. The integrated circuit manufacturing system may comprise: a non-transitory computer readable storage medium having stored thereon a computer readable description of a data processing system as described above; a layout processing system configured to process the computer readable description so as to generate a circuit layout description of an integrated circuit embodying the data processing system; and an integrated circuit generation system configured to manufacture the data processing system according to the circuit layout description. The layout processing system may be configured to determine positional information for logical components of a circuit derived from the integrated circuit description so as to generate a circuit layout description of an integrated circuit embodying the data processing system.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a flow chart depicting a method according to an example of a first aspect;

Figure 2A is a block diagram of an exemplary data processing system;

Figure 2B is a block diagram of a hardware block as used in Figure 2A;

Figure 2C is a block diagram of a convolution engine as used in Figure 2B;

Figure 3 illustrates an example of a first set of samples;

Figure 4 is a number line illustrating the X coordinates of a set of sampling locations;

Figure 5 is a coordinate grid illustrating a set of sampling locations in two dimensions;

Figure 6 illustrates a set of convolution operations;

Figure 7 illustrates the arranging of the output of the set of convolutions of Figure 6;

Figure 8 shows a data processing system in which a neural network accelerator is implemented; and

Figure 9 shows an integrated circuit manufacturing system for generating an integrated circuit embodying a data processing system or neural network accelerator.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

According to a comparative example, the upsampling of a first set of samples can be implemented using convolution operations. These convolution operations convolve kernels with the first set of samples, using a stride of one, to interpolate the values of the second set of samples. The convolution operations provide as an output a series of matrices containing these values. A depth-to-space operation (and optionally a concatenation operation) may be performed on the outputs of the convolution operations, to produce a second set of samples arranged such that the position of each sample relative to the other samples is the same as the position of the sampling location for which it was calculated relative to the other sampling locations. In other words, the depth-to-space operation arranges the values determined by the convolution operations into one matrix, where the values are arranged in the same order as the sampling locations. In this way, the result of the depth-to-space operation is a resampled version of the first set of samples.

Some of the values calculated in the convolution operation are discarded in the subsequent downsampling operation, meaning that the calculation of those values was redundant as they do not contribute to the second set of samples. Furthermore, this method cannot be used to implement fractional upsampling or fractional downsampling in a single pass through a neural network accelerator, as a subsequent downsampling operation is still required.

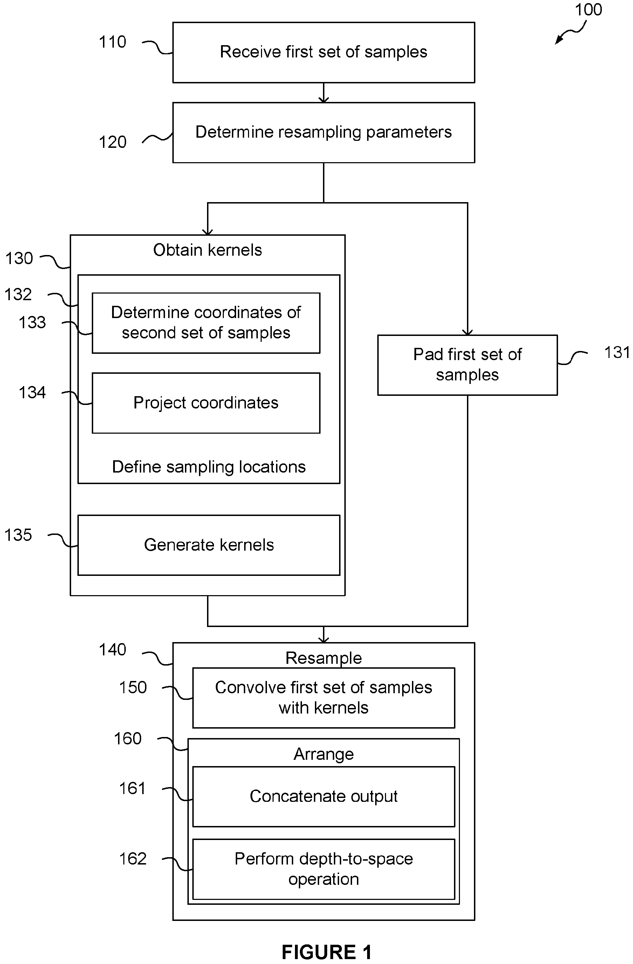

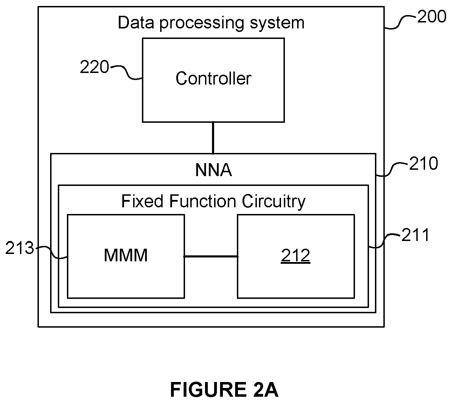

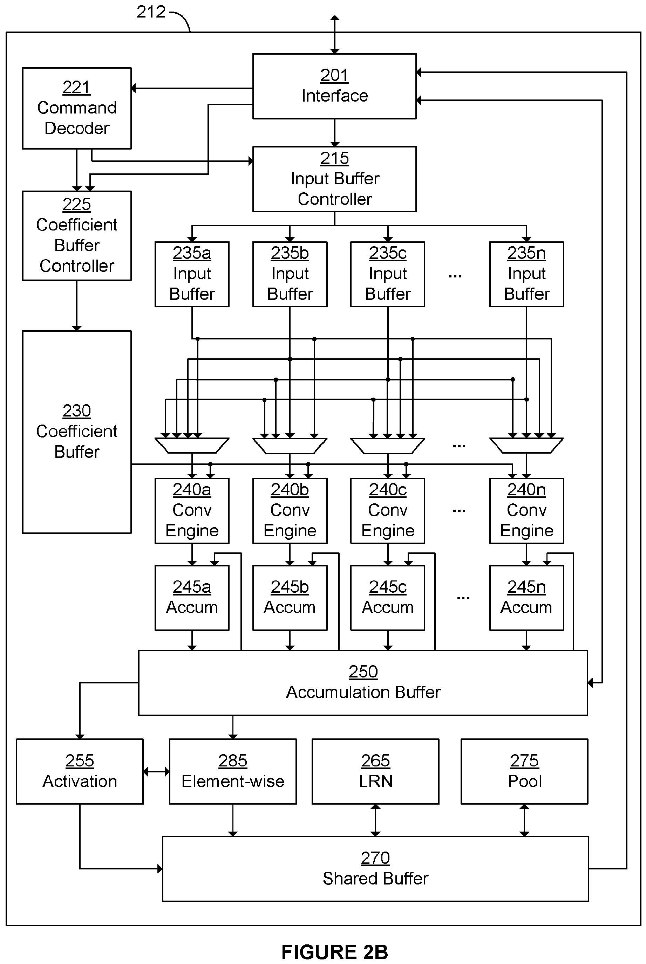

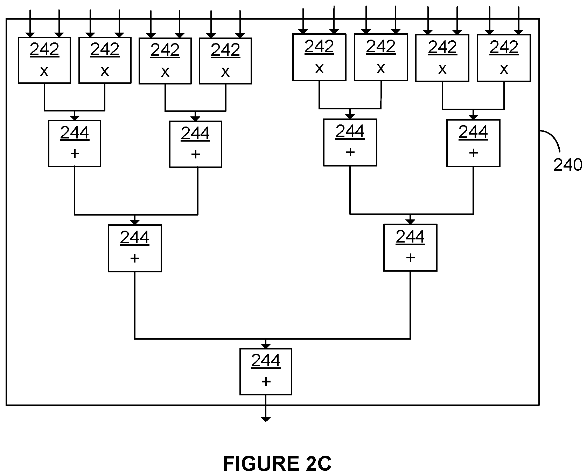

Figure 1 is a flowchart illustrating a method 100 according to an example of the present disclosure. In this example, the method is performed by the data processing system 200 depicted in Figure 2. The data processing system 200 comprises a neural network accelerator (NNA) 210 and a controller 220. The NNA 210 contains fixed function circuitry 211. The fixed function circuitry 211 comprises a hardware block 212 and a memory manipulation module (MMM) 213.

Figure 2B depicts an exemplary hardware block 212. The hardware block 212 includes the following hardware:

- A set of convolution engines 240, specialised at performing convolution operations;
- An element-wise operations unit 285, specialised at performing the same operation to every pair of respective elements of two tensors of corresponding size;
- An activation unit 255, specialised at applying an activation function (which may be selectable, configurable, or fully programmable) to every element of a tensor;
- A local response normalisation (LRN) unit 265 (or normalisation unit, for short), specialised at performing neighbourhood-based normalisation operations; and
- A pooling unit 275, specialised at performing pooling operations, such as max-pooling and min-pooling.

In greater detail, hardware block 212 comprises digital logic circuitry that is configured to receive data (including input tensors and resampling parameters) and commands for processing the input tensors. The hardware block 212 comprises an interface 201, an input buffer controller 215, a command decoder 221, a coefficient buffer controller 225, a coefficient buffer 230, $n$ input buffers 235, $n$ convolution engines 240, $n$ accumulators 245, an accumulation buffer 250, an activation unit 255, a local response normalize (LRN) unit 265, a shared buffer 270, a pooling unit 275, and an element-wise operations unit 285.

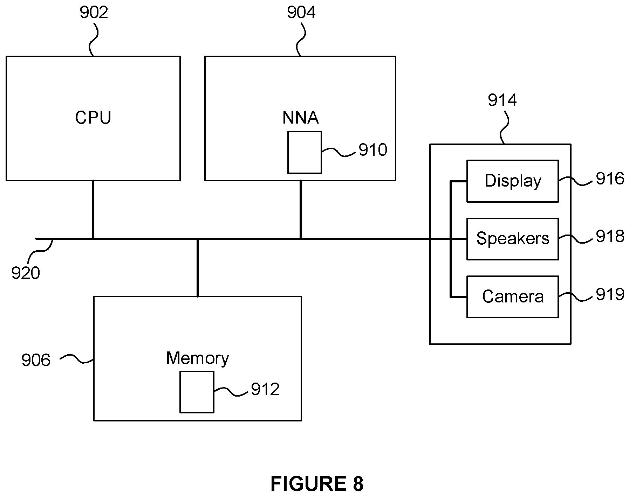

The interface 201 is configured to provide an interface between the hardware block 212 and other components of the data processing system, such as the controller 220 of Figure 2, the MMM 213 or an external memory 906 (not shown in Fig. 2, but shown in Fig. 8).

The interface 201 is configured to receive from the controller 220 a first set of samples 300, resampling parameters and kernels to be used in calculations within the neural network, as well as command information to control the operation of the hardware block 212. The received kernels (the elements of which are also referred to herein as "coefficients") are passed to the coefficient buffer controller 225 and the first set of samples is passed to the input buffer controller 215. The received commands are passed to the command decoder 221, which, in turn, is configured to decode the commands and subsequently issue control information to elements of the hardware accelerator, including the coefficient buffer controller 225 and input buffer controller 215 to control the manner in which the data is stored in the buffers.

The kernels are passed from the coefficient buffer controller 225 to the coefficient buffer 230 and the first set of samples 300 is passed from the input buffer controller 215 to a plurality of input buffers 235a-235n. The number of input buffers will depend upon the specific implementation of the hardware block 212 but may take any value. The input data is shared across all of the input buffers 235a-235n.

The input buffers 235a-235n are connected to each of a plurality of multiplexers, since each convolution engine 240a-240n requires access to all of the effective 'banks' of the input data. The multiplexers are each configured to select an output from one of the input buffers 235 and to pass the values output from the selected input buffer 235 to a respective convolution engine 240a-240n. In addition, kernels from the coefficient buffer 230 are provided as a second input into each convolution engine 240a-240n. The convolution engines 240 are configured to perform a convolution calculation on the first set of samples 300 using the kernels received from the coefficient buffer 230. The resultant output of each convolution engine 240a-240n is provided as an input to a respective accumulator of a plurality of accumulators 245a-245n.

Each accumulator 245a-245n is connected to an accumulation buffer 250. The accumulation buffer 250 is configured to store accumulated results received from each accumulator 245a-245n. The accumulation buffer 250 is connected to the interface 201. As such, the accumulation buffer 250 may send and receive data to and from external memory 906 via interface 201. Specifically, the accumulation buffer 250 is configured to be able to store and restore its values from the external memory 906 via interface 201, as will be described in more detail below. The accumulation buffer 250 is connected to the input of the accumulators 245a-245n and is configured to feed values back into the accumulators 245a-245n to enable accumulation calculations to take place.

The accumulation buffer 250 may be configured to pass accumulated values to the activation unit 255 and/or the element-wise operations unit 285. The activation unit 255 is configured to perform at least one of a number of different activation functions.

The resultant value calculated by the activation unit 255 can be passed to be processed by the LRN unit 265 and/or the pooling unit 275 via the shared buffer 270. The LRN unit 265 is configured to perform a local response normalisation. This may be performed within a single plane of input data. Alternatively or in addition, the LRN operation may also be performed across planes.

A result stored in the shared buffer 270 can be passed to the interface 201 which can store the result in external memory 906, pass the result to the MMM 212, or pass the result back into the input buffers for further processing without having to first be passed out to external memory.

The shared buffer 270 is configured to buffer values from any one or more of the activation unit 255, the LRN unit 265, the pooling unit 275, and the element-wise operations unit 285 until all the values required to perform the next operation are available. In this way, the shared buffer 270 is used for efficiency of storage as it can hold values required in later operations without having to use external memory 906.

The element-wise operations unit 285 comprises circuitry configured to perform element-wise operations on tensors received from the accumulation buffer 250 and/or activation unit 255. The supported element-wise operations may include element-wise addition, subtraction, multiplication, division, and maximum (or minimum) of the respective elements of the tensors.

Element-wise operations are operations that are repeated for multiple elements of at least one tensor. The operations are typically repeated for all elements of the tensor. Two categories of element-wise operation may be considered: unary operations, having a single operand, and binary operations, having two operands. The element-wise operations unit 285 handles binary element-wise operations. Element-wise operations may also be performed by other components of the hardware accelerator. For example, the activation unit 255 may perform unary element-wise operations, by applying a function to every element of a tensor.

Whilst the hardware block 212 of Figure 2B illustrates a particular order in which the units are arranged and thus how the processing of data flows through the hardware implementation, it will be appreciated that the specific calculations required and the order in which data is processed may vary.

Figure 2C illustrates the structure of each of the convolution engines 240 in Figure 2B. The convolution engine 240 comprises a plurality of elements of multiply logic 242, each configured to multiply a weight by an input data element, and a plurality of elements of addition logic 244, configured in a tree structure to sum the outputs of the elements of multiply logic 242.

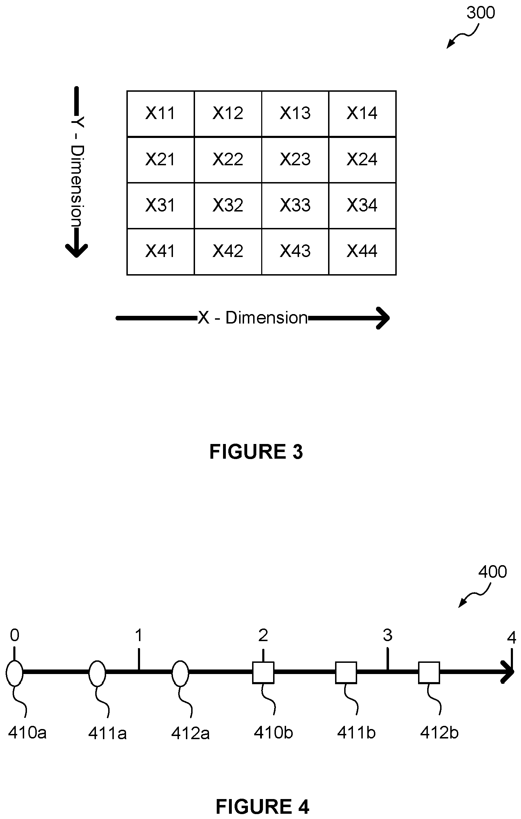

In step 110, the controller 220 receives a first set of samples 300. The first set of samples 300 of the present example is depicted in Figure 3 and is a 4 × 4 matrix containing 16 elements. The position of each of the samples can be described using an X-Y coordinate system that has its origin at the X11 sample. This coordinate system is known as the first coordinate system. The first set of samples 300 extends in (that is, has a size greater than one in) the X and Y dimensions.

In step 120, the controller 220 determines a set of resampling parameters. In the present example, the resampling parameters are received by the controller and include a first resampling factor $\frac{a_1}{b_1} = \frac{3}{2}$ for the X dimension, a second resampling factor $\frac{a_2}{b_2} = \frac{3}{2}$ for the Y dimension, a first offset $d_1 = 0$ for the X dimension, and a second offset $d_2 = 0$ for the Y dimension. As the first and second resampling factors are each greater than one, the resampling process will upsample the first set of samples 300 in both the X and Y dimensions. Consequently, the second set of samples (produced by the resampling process) will contain more samples than the first set of samples 300. The first and second offsets define amounts by which the sampling locations (the coordinates $X^{proj}_{out}$ ) are offset in the X and Y dimensions of the first coordinate system, respectively. This will be explained in more detail below; however, in the present example the offsets are both equal to zero.

In step 130, the controller 220 obtains $a_1 \times a_2 = 9$ kernels. The significance of this number of kernels will be explained in more detail below. By convolving these kernels with the first set of samples 300, values at the sampling locations (in other words, the values of the second set of samples) can be calculated. In the present example, the controller 220 generates the kernels based on the resampling parameters.

In step 131, the controller 220 pads the first set of samples 300 with zeros, to increase the size of the first set of samples 300 in the X and Y dimensions. The size of the X (first) dimension is increased, through padding, by

$$n_x = \left\lfloor \frac{size_x}{b_1} \right\rfloor (b_1 - 1) + (b_1 + 1) - size_x$$

; and the size of the Y (second) dimension is in-

$$n_y = \left\lfloor \frac{size_y}{b_2} \right\rfloor (b_2 - 1) + (b_2 + 1) - size_y$$

creased, through padding, by . The variable "$size_x$" refers to the size of the first set of samples in the X dimension, and the variable "$size_y$" refers to the size of the first set of samples in the Y dimension. In the present example, the X dimension is the horizontal dimension, so "$size_x$" refers to the width "W" of the first set of samples. Similarly, in the present example the Y dimension is the vertical dimension, so "$size_y$" refers to the height "H" of the first set of samples. Therefore, the first set of samples 300 is padded by inserting

$$n_c = \left\lfloor \frac{W}{b_1} \right\rfloor (b_1 - 1) + (b_1 + 1) - W$$

columns of zeros, and

$$n_r = \left\lfloor \frac{H}{b_2} \right\rfloor (b_2 - 1) + (b_2 + 1) - H$$

rows of zeros. In the present example, $H = W = 4$, and $n_r = n_c = 1$. This padding allows the kernels to traverse beyond the edges of the first set of samples 300 during the convolution operations and contributes to new samples being calculated outside of the bounds of the first set of samples 300. It should be understood that step 131 can be performed before, after, or at the same time as step 130. While in the present example the X dimension is the horizontal dimension and the Y dimension is the vertical dimension, this need not always be the case. For example, in other examples the X dimension (or first dimension) might not be the horizontal dimension and the Y dimension (or second dimension) might not be the vertical dimension.

The generation of the kernels in step 130 will be explained in more detail with reference to steps 132-135 of the method.

In step 132, the processor 230 defines a subset of sampling locations $X^{proj}_{subset\ out}$. This step comprises determining X and Y coordinates in a second coordinate system (the coordinate system $C_{out}$) for a subset of the second set of samples. This is depicted as step 133 in Figure 1. In the present example the origin of the second coordinate system is chosen to be the location of the top left most sample in the second set of samples and each sample is located at an increment of one in the X and/or Y dimensions. The subset of the second set of samples is arranged in a rectangle (in this example, a square) that comprises the first $a_1 \times a_2$ samples in the X and Y dimensions. The X and Y coordinates of the subset of the second set of samples are calculated as follows:

$$X_{subset\ out} = \left( X^x_{subset\ out}, X^y_{subset\ out}, \cdots \right)$$

$$= \left( (x_i)_{i=0}^{a_1-1} = i, (y_j)_{j=0}^{a_2-1} = j \right)$$

For the reference of the reader, the coordinates of each of the samples in the second set of samples are calculated using the following expression:

$$X_{out} = \left(X_{out}^x, X_{out}^y, \dots\right) = \left((x_i)_{i=0}^{\frac{a_1}{b_1}W-1} = i, (y_j)_{j=0}^{\frac{a_2}{b_2}H-1} = j\right)$$

The coordinates of the subset of sampling locations $X_{subset\ out}^{proj}$ are calculated by projecting 134 the coordinates of the subset of the second set of samples into the coordinate system of the first set of samples using the following expression:

$$X_{subset\ out}^{proj} = \frac{X_{subset\ out}}{\alpha} + d$$

$$= \left((x_{*i})_{i=0}^{a_1-1} = \frac{b_1}{a_1}i + d_1, (y_{*j})_{j=0}^{a_2-1} = \frac{b_2}{a_2}j + d_2\right)$$

Again note the use of the asterisk in $x_{*i}$ and $y_{*j}$. The asterisk notation indicates that these X and Y coordinates are for the first coordinate system.

For the reference of the reader, the X and Y coordinates of all of the sampling locations can be determined using the following expression:

$$X_{out}^{proj} = \frac{X_{out}}{\alpha} + d$$

$$= \left((x_{*i})_{i=0}^{\frac{a_1}{b_1}W-1} = \frac{b_1}{a_1}i + d_1, (y_{*j})_{j=0}^{\frac{a_2}{b_2}H-1} = \frac{b_2}{a_2}j + d_2\right)$$

The sampling locations are the locations in the first coordinate system at which values for the second set of samples will be calculated by the convolutions. Figure 4 depicts a number line 400, spanning zero to four. This number line represents the X axis of the first coordinate system. The X coordinate of each of the samples in the first set of samples 300 is represented by an integer on the number line. The origin provides the X coordinate of the left most column of the first set of samples 300 (containing samples X11, X21, X31 and X41). The second column of the first set of samples 300, which contains samples X12, X22, X32 and X42, has X coordinates equal to "2". This pattern continues for the first set of samples 300, with the fourth column (containing samples X14, X24, X34 and X44) having an X coordinate of "3". The position "4" on the number line is outside of the bounds of the first set of samples 300, and corresponds to location of the column of zeros added to the first set of samples 300 in the padding step.

The X coordinates of the subset of sampling locations are as follows:

$$(x_{*i})_{i=0}^{a_1-1} = \left(\frac{b_1}{a_1}\right)i + d_1, \quad x_{*0} = 0, \ x_{*1} = \frac{2}{3}, \ x_{*2} = \frac{4}{3}$$

These X coordinates are represented on the number line 400 by ellipses 410a, 411a and 412a.

As the first set of samples 300 has a size of four samples in the X dimension, and as the resampling factor is $\frac{3}{2}$, the output of the resampling process should be a second set of samples having a size of $\frac{3}{2} \times 4 = 6$ in the X dimension. Therefore, every sampling location must have one of six possible X coordinates. In general, for a first set of samples having a size of $W$ (in the X dimension) the expected output of the resampling process is a second set of

$$\frac{a_1}{b_1} \times W$$

samples having a size of (in the X dimension). For the reference of the reader, by applying indices 3 to 5 to the above equation, the X coordinates of the remaining sampling locations can be determined to be:

$$(x_{*i})_{i=3}^5 = \left(\frac{b_1}{a_1}\right) i + d_1, \quad x_{*3} = 2, \quad x_{*4} = \frac{8}{3}, \quad x_{*5} = \frac{10}{3}$$

These remaining X coordinates are represented on the number line 400 by squares 410b, 411b and 412b. As the first offset is equal to zero in the present example, there has been no offset of the sampling locations. However, if the first offset were not equal to zero, the X coordinates of the sampling locations (and by extension the second set of samples) would be shifted from their present positions (and therefore shifted relative to the first set of samples) by the first offset.

In the present example, the resampling factor for the Y dimension is the same as the resampling factor for the X dimension, the second offset is equal to the first offset, and the size $H$ of the first set of samples 300 in the Y dimension is the same as the size $W$ of the first set of samples 300 in the X dimension. Consequently, the values of the Y coordinates of the subset of sampling locations are as follows:

$$(y_{*j})_{j=0}^{a_2-1} = \left(\frac{b_2}{a_2}\right) j + d_2, \quad y_{*0} = 0, \quad y_{*1} = \frac{2}{3}, \quad y_{*2} = \frac{4}{3},$$

Again, for the reference of the reader, by applying indices 3 to 5 to the above equation the Y coordinates of the remaining sampling locations can be calculated:

$$(y_{*j})_{j=3}^5 = \left(\frac{b_2}{a_2}\right) j + d_2, \quad y_{*3} = 2, \quad y_{*4} = \frac{8}{3}, \quad y_{*5} = \frac{10}{3}$$

Each sampling location is defined in the first coordinate system by a combination of one of the above listed X coordinates and one of the above listed Y coordinates.

As can be seen from Figure 4, the X coordinates of the sampling locations exhibit a periodicity of $a_1$ = 3. For example, $x_{*3} = x_{*0+a1} = x_{*0} + b_1$. Similarly, the Y coordinates of the sampling locations exhibit a periodicity of $a_2$ = 3. For example, $y_{*4} = y_{*1+a2} = y_{*1} + b_2$. More generally, $x_{*i+\rho a1} = x_{*i} + \rho b_1$ and $y_{*j+\sigma a2} = y_{*j} + \sigma b_2$, where $\rho$ and $\sigma$ are integers greater than or equal to zero. In other words, the periodic X coordinates of the sampling locations have values that differ by an integer multiple of $b_1$ and the periodic Y coordinates of the sampling locations have values that differ by an integer multiple of $b_2$. The subset of sampling locations (those sampling locations defined by the combination of the coordinates

$$(x_{*i})_{i=0}^{a_1-1} \text{ and } (y_{*j})_{j=0}^{a_2-1})$$

can be thought of like the unit cell of a crystal, in that they are the smallest repeating unit of the lattice of sampling locations. Any sampling location not belonging to the subset of sampling locations can be described by the addition of an integer multiple of $b_1$ to the X coordinate of one of the subset of sampling locations and/or the addition of an integer multiple of $b_2$ to the Y coordinate of one of the subset of sampling locations.

Due to the periodic nature of the sampling locations, the processor 230 need only determine X and Y coordinates for the subset of sampling locations (and not for all of the sampling locations). In other words, in the present example only the coordinates of the first $a_1 \times a_2$ sampling locations (defined by combinations of the $0^{th}$ to $a_1$ - $1^{th}$ X coordinates and $0^{th}$ to $a_2$ - $1^{th}$ Y coordinates of the sampling locations) need to be calculated in order to be able to define all of the sampling locations. The subset of sampling locations contains $a_1 \times a_2$ = 9 sampling locations having coordinates

$$(x_{*i}, y_{*j})_{i=0,j=0}^{a_1-1, a_2-1}.$$

$$\left(x_{*i}, y_{*j}\right)_{i=0, j=0}^{a_1-1, a_2-1}$$

In step 135, the controller 220 generates a set of kernels $\left(K_{i,j}\right)_{i=0, j=0}^{a_1-1, a_2-1}$. Each kernel in the set has elements chosen such that, when the kernel is convolved with first set of samples 300, that kernel will calculate a value at one of the $\left(x_{*i}, y_{*j}\right)_{i=0, j=0}^{a_1-1, a_2-1}$ sampling locations (that is, one of the subset of sampling locations). Note the correspondence in indices between the kernels $K_{i,j}$ and the subset of sampling locations $(x_{*i}, y_{*j})$. For a given value of $i$ and $j$, the kernel $K_{i,j}$ has elements chosen to calculate a value at sampling location $(x_{*i}, y_{*j})$.

In general, the kernels have a minimum size in the X dimension that is the greater of $(b_1 + 1)$ and R, and a minimum size in the Y dimension that is the greater of $(b_2 + 1)$ and R. R is a lower limit that depends on the type of interpolation chosen to calculate the new values. For example, R = 1 for nearest neighbour interpolation, R = 2 for bilinear interpolation and R = 4 for bicubic interpolation. In the present example, which utilises bilinear interpolation, and in which $b_1 = b_2 = 2$, the minimum kernel size in the first and second dimensions is equal to three. In the present example, each of kernel will be a $3 \times 3$ kernel.

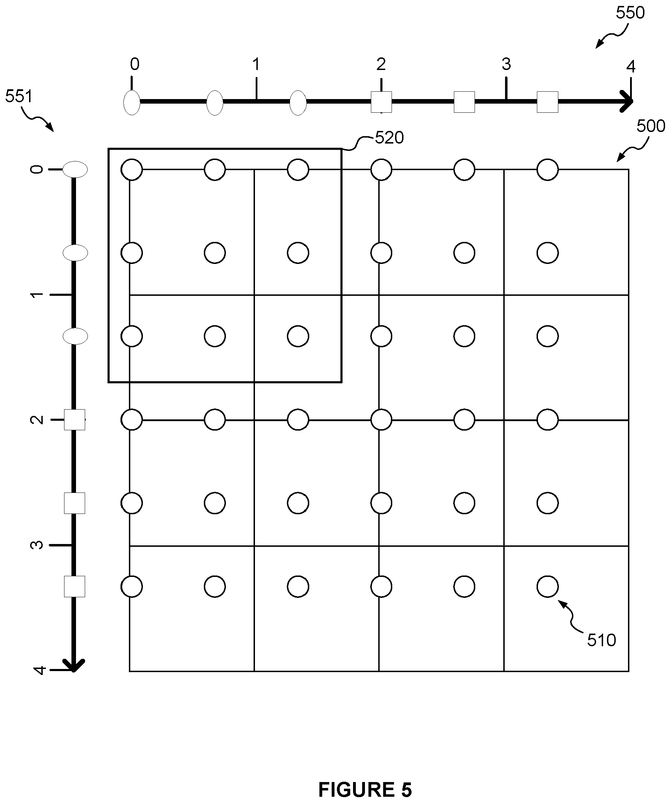

As the purpose of the set of kernels is to calculate a value at each of the $\left(x_{*i}, y_{*j}\right)_{i=0, j=0}^{a_1-1, a_2-1}$ sampling locations, the processor 230 generates $a_1 \times a_2 = 9$ kernels. Due to the periodicity of the sampling locations, these nine kernels can be used to determine values at the sampling locations other than the subset of sampling locations (i.e. the nine kernels can also be used to determine values at all of the sampling locations outside of box 520 in Figure 5).

The values of the elements of each of the kernels depend on the type of interpolation being used. As mentioned above, in the present example, bilinear interpolation is used. In bilinear interpolation, the four samples in the first set of samples that are closest in space (that is, in the X and Y dimensions of the first coordinate system) to a given sampling location contribute to the value calculated at that sampling location. For each value of $i$ and $j$ in the range $0 \rightarrow a_1 - 1$, $a_2 - 1$ (for $i$ and $j$ respectively), kernel $K_{i,j}$ has kernel elements

$$\left(k_{l,m}\right)_{l=0, m=0}^{b_1, b_2} = (1 - |x_i - l|) \times (1 - |y_j - m|)$$

. Kernels elements $k_{l,m}$ are set to zero where $|x_i - l| > 1$ and/or $|y_j - m| > 1$, to enforce the condition that only the four samples closest to a given sampling location contribute to the value calculated for that sampling location.

More generally, the elements of each of the kernels have values such that, when kernel $K_{i,j}$ is convolved with the padded first set of samples, the result of that convolution is a value calculated for sampling location $(x_{*i}, y_{*j})$ using the chosen type of interpolation.

As an example of the application of the above equation, kernel $k_{1,1}$ has the following elements:

$$\begin{bmatrix} \frac{1}{9} & \frac{2}{9} & 0 \\ \frac{2}{9} & \frac{4}{9} & 0 \\ 0 & 0 & 0 \end{bmatrix}$$

In step 140 the NNA 210 resamples the padded first set of samples using the nine kernels $k_{0,0} \rightarrow k_{2,2}$. The process will be explained in more detail with reference to steps 150 and 160-162.

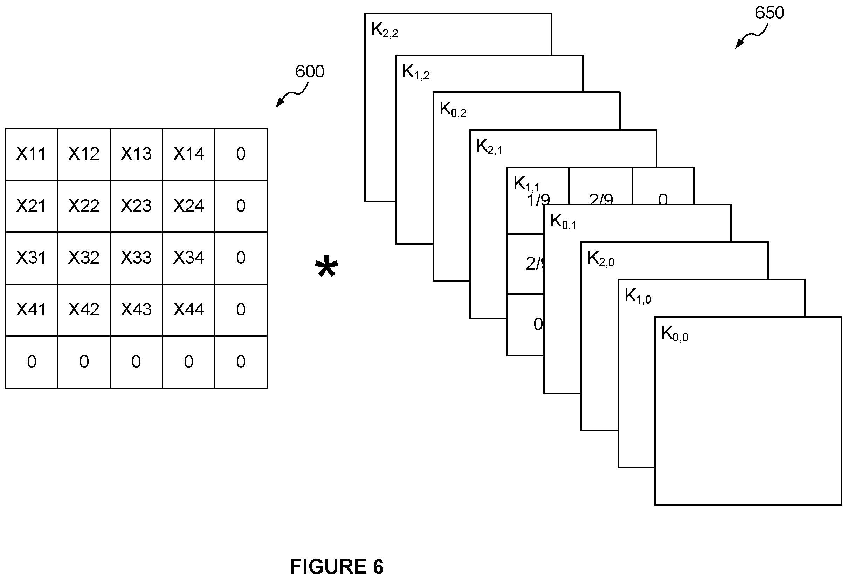

The resampling comprises, in step 150, using the convolution engines (CEs) 240 of the NNA 210 to convolve each of the nine kernels 650 with the padded first set of samples 600, as shown in Figure 6.

As mentioned above, the sampling locations exhibit a periodicity of $a_1$ in the X dimension and a periodicity of $a_2$ in the Y dimension. This periodicity can be exploited when performing the convolutions to enable values to be calculated for all of the sampling locations using only the nine kernels $K_{0,0} \rightarrow K_{2,2}$ This is because the kernels exhibit the same periodicity as the X coordinates and Y coordinates of the sampling locations: $x_{*i+\rho a1} = x_{*i} + \rho b_1$, $y_{*j+\sigma a2} = y_{*j} + \sigma b_2$ and

$K_{i+\rho a1, j+\sigma a2} = K_{i,j}$ (where $\rho$ and $\sigma$ are integers). In other words, because of the periodicity of the sampling locations, the elements of a kernel $K_{i,j}$ for calculating a value at a given sampling location $(x_{*i}, y_{*j})$ have the same values in the same positions as the elements of a kernel $K_{i+\rho a1, j+\sigma a2}$ for calculating a value at sampling location $(x_{*i+\rho a1}, y_{*j+\sigma a2})$. Reuse of the kernels $K_{0,0} \rightarrow K_{2,2}$ is achieved by performing the convolutions with a stride of $b_1$ in the X dimension and $b_2$ in the Y dimension. This stride matches the periodic nature of the sampling locations $(x_{*i+\rho a1} = x_{*i} + \rho b_1, y_{*j+\sigma a2} - y_{*j} + \sigma b_2)$, ensuring that each kernel $K_{i,j}$ is applied only to sampling locations $(x_{*i+\rho a1}, y_{*j+\sigma a2})$.

As a result of the above strides of the convolutions, each convolution of a kernel with the padded first set of samples 600 calculates values only at sampling locations, and in particular only at periodic sampling locations. As each sampling location corresponds to a sample in the second set of samples, the convolutions only calculate values that will be used in the second set of samples. In other words, no values calculated by the convolutions need be discarded. This reduces (to zero) the computational resources spent calculating values that will not contribute to the second set of samples. Furthermore, no two kernels calculate values at the same sampling locations. In other words, no value for a sample is calculated twice.

The output of the nine convolution operations consists of nine output matrices $(M_{i,j})_{i=0, j=0}^{a_1-1, a_2-1}$. Each matrix contains the values generated by the convolution of one of the kernels with the padded first set of samples 600. In the present example, each of the nine matrices contains four values calculated for a periodic group of sampling locations. The number of values in each matrix depends on the size of the padded first set of samples 600 and the strides of the convolution in the X and Y dimensions. For a given value of $i$ and $j$, each matrix $M_{i,j}$ contains new samples calculated at sampling locations periodic with each other. As explained above, "periodic" or "periodic with each other" means that the sampling locations satisfy the following relationship: $x_{*i+\rho a1} = x_{*i} + \rho b_1$ and $y_{*j+\sigma a2} = y_{*j} + \sigma b_2$. For example, matrix $M_{0,0}$ contains values $S_{out}(x_{*i+\rho a1}, y_{*j+\sigma a2})$ calculated for the following sampling locations: $(x_{*0}, y_{*0})$, $(x_{*3}, y_{*0})$, $(x_{*0}, y_{*3})$ and $(x_{*3}, y_{*3})$. In other words, matrix $M_{0,0}$ contains the following elements:

$$\begin{bmatrix} S_{out}(x_{*0}, y_{*0}) & S_{out}(x_{*3}, y_{*0}) \\ S_{out}(x_{*0}, y_{*3}) & S_{out}(x_{*3}, y_{*3}) \end{bmatrix}$$

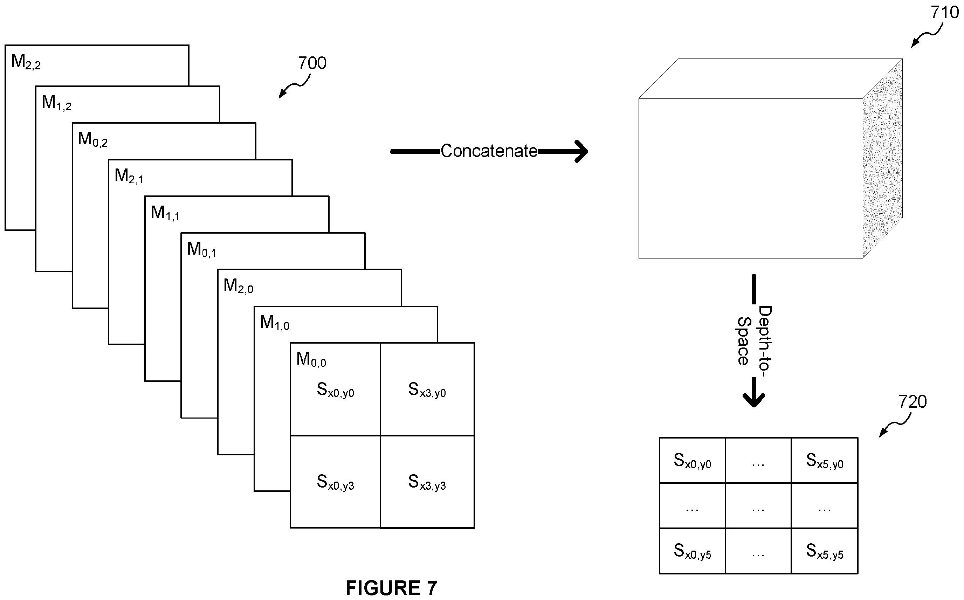

In step 160, the NNA 210 arranges the elements of the nine output matrices 700 to produce the second set of samples. This process is depicted in Figure 7 and includes steps 161 and 162.

In step 161, the MMM 213 concatenates the nine output matrices 700 in the depth dimension, to produce a three-dimensional tensor 710. In step 162, the MMM 213 performs a depth-to-space operation to reduce the dimensionality of the tensor 710 to match the dimensions of the first set of samples 300, thereby producing the second set of samples. In the present example, that means removing the depth dimension to produce a two-dimensional output. The depth-to-space operation is performed with a stride of $a_1$ in the X dimension, and a stride of $a_2$ in the Y dimension. These strides exploit the periodicity of the values (which results from the periodicity of the sampling locations) to arrange the values such that they match the arrangement of the sampling locations shown in Figure 5. In other words, the strides of the depth-to-space operation arrange the values such that the $i$ index of the value increases in increments of one in the X dimension, and the $j$ index increases in increments of one in the Y dimension. The result of the depth-to-space operation is a second set of samples 720, fractionally upsampled relative to the first set of samples 300 by a factor of $\frac{3}{2}$ in the X and Y dimensions.

It should be understood that the scope of the present disclosure is not limited to the examples above. Many variations are possible, including but not limited to the following.

In the example described above, the first set of data samples was two-dimensional. However, this need not be the case. The first set of data samples can be one dimensional, or have more than two dimensions. In general, the first set of samples can be described as a tensor extending in $n$ dimensions. The method need not be applied to all of the $n$ dimensions of the first set of samples. That is to say, not all of the $n$ dimensions need be resampled. For example, the two-dimensional first set of samples 300 (depicted in figure 3) could be resampled in only the X dimension, or only the Y dimension. The method only requires a resampling factor and offset (known as resampling parameters) for the dimension(s) being resampled. For any dimensions for which resampling parameters are not provided, the method may assume a value of 0 for the offset and a value of 1 for the resampling parameter. To resample the entire first set of samples, in any number of dimensions, each kernel may have the same dimensionality as the first set of samples.

While the first set of samples 300 is depicted in Figure 3 as having the same height as its width, this need not be the case. The method can be applied to a set of samples having a height different to its width.

In the example described above, the first resampling factor was equal to the second resampling factor. However, in other examples this may not be the case. The values of the first resampling factor and the second resampling factor (and any additional resampling factors that may be present in the case of resampling in more than two dimensions) are independent, and can take different values. In some examples, the first resampling factor may be greater than one, and the second resampling factor may be less than one. In some examples, the first and second resampling factors may each be greater than one or less than one.

In the example described above, the resampling parameters were each greater than one, meaning that the first set of samples was fractionally upsampled in the X dimension and the Y dimension. However, in some examples, one or more of the resampling factors may be less than one, meaning that the first set of samples is fractionally downsampled in that dimension.

In some examples, one or more of the resampling factors, or all of the resampling factors, may be greater than one but less than two, or greater than zero or less than one. In some examples, each resampling factor may be expressed as a fraction having a greatest common divisor of 1.

In some examples, the resampling factor for a given dimension may be equal to one and the offset for that dimension may have a non-zero value. In this case, the method will neither fractionally upsample nor fractionally downsample the first set of samples in the given dimension. Instead, the method will return a second set of samples that is offset in the given dimension by an amount equal to the non-zero offset. In general, for a set of samples having $n$ dimensions, at least one of the dimensions may have either:

(A) a resampling factor not equal to one, and an offset having any value (that is to say the offset may be equal to zero, have a positive value greater than zero or have a negative value less than zero); or

(B) a resampling factor equal to one, and an offset that is not equal to zero.

In the example of Figure 1, in the step 130 of obtaining the kernels, the controller 220 generated the kernels at runtime by performing steps 131-135. However, in some examples (in particular when the resampling parameters are known in advance), a memory (such as the memory 906 of Figure 8) may store the kernels. The kernels may have been pre-determined, and the controller 220 may receive the kernels along with the resampling parameters and the first set of samples. Alternatively, the controller 220 may be provided with a memory address at which the kernels are stored, and may obtain the kernels by reading them from the memory. The memory may store a plurality of sets of kernels, each set of kernels generated for a different set of resampling parameters. Obtaining the kernels may comprise selecting and reading from the memory the set of kernels generated for the received resampling parameters.

In the example described above with reference to Figure 1, the convolution of the kernels with the first set of samples implemented bilinear interpolation. However, in other examples a different type of interpolation may be used. For example, new samples can be calculated using nearest neighbour interpolation or bicubic interpolation.

For nearest neighbour interpolation, each new sample takes the value of the sample in the first set of samples that is closest (in proximity) to the sampling location in question. Consequently, for this type of interpolation, each kernel will have only one non-zero element, and the non-zero element of the kernel will be equal to one. The non-zero element will be located at the position in the kernel that corresponds to position of the sample in the first set of samples that is closest to the sampling location. In the example described with reference to Figure 1, for sampling location $(x_{*0}, y_{*0})$, the value of the sample (in the first set of samples) located at coordinates (0, 0) in the first coordinate system is duplicated by the interpolation. This is the top left most sample in the first coordinate system, and therefore kernel $K_{0,0}$ will have coefficients:

$$K_{0,0} = \begin{bmatrix} 1 & 0 & 0 \\ 0 & 0 & 0 \\ 0 & 0 & 0 \end{bmatrix}.$$

For sampling location $(x_{*1}, y_{*0})$, the sample located at coordinates (1, 0) is closest to the sampling location, and therefore the value calculated for that sampling location will have the value of the sample in the first set of samples at coordinates (1, 0). Consequently, kernel $K_{1,0}$ will have coefficients:

$$K_{1,0} = \begin{bmatrix} 0 & 1 & 0 \\ 0 & 0 & 0 \\ 0 & 0 & 0 \end{bmatrix}.$$

In the example described with reference to Figure 1, the resampling step 140 was performed by the NNA 210 of the data processing system 200, and in particular by the fixed function hardware 211 of the NNA. However, in some examples, the data processing system might not comprise an NNA. In some examples, the resampling step 140 may be performed by a GPU, or by a CPU.

In some examples, the method might not comprise a concatenation step. Instead, the output of the convolutions may be written to memory in such a way that a concatenation step is not required, and the depth-to-space operation can be performed directly on the output. In some examples, such as where the first set of samples has multiple channels, the first set of samples may be split along the input channels to provide multiple sets of single-channel samples. Each set of (single-channel) samples may be resampled independently according to the disclosed method. The (single-channel) second set of samples produced by each of the resampling operations may then be concatenated to provide resampled multi-channel data. Alternatively, the outputs of the convolution operations of each resampling operation may be concatenated before the depth-to-space operation is performed.

In the example described above with reference to Figure 1, the stride of the convolutions was $b_1$ in the first dimension and $b_2$ in the second dimension. However, more generally, the stride of the convolutions in the respective dimensions is equal to the value of $b$ in that dimension when $a$ and $b$ (in that dimension) have a greatest common divisor of 1. When $a$ and $b$ in a given a dimension have a greater common divisor than one, the fraction - should be reduced such that $a$ and $b$ have a greatest common divisor of one. The stride of the convolution will then be this reduced value of $b$. More generally, any operation or calculation involving $a$ and $b$ should use the reduced values of $a$ and $b$.

In some examples, the NNA 210 may comprise the controller 220. In these examples the method may be said to be performed entirely by the NNA 210.

Figure 8 shows a data processing system in which the neural network systems described herein may be implemented. The data processing system comprises a CPU 902, a NNA 904, a memory 906 and other devices 914, such as a display 916, speakers 918 and a camera 922. A processing block 910 (corresponding to fixed function circuitry 211) is implemented on the NNA 904. In other examples, one or more of the depicted components may be omitted from the system, and/or the processing block 910 may be implemented on the CPU 902 or within a GPU. The components of the computer system can communicate with each other via a communications bus 920. A store 912 is implemented as part of the memory 906.

The data processing system of Figures 2 and 8 are shown as comprising a number of functional blocks. This is schematic only and is not intended to define a strict division between different logic elements of such entities. Each functional block may be provided in any suitable manner. It is to be understood that intermediate values described herein as being formed by a data processing system need not be physically generated by the data processing system at any point and may merely represent logical values which conveniently describe the processing performed by the data processing system between its input and output.

The data processing systems described herein may be embodied in hardware on an integrated circuit. The data processing systems described herein may be configured to perform any of the methods described herein. Generally, any of the functions, methods, techniques or components described above can be implemented in software, firmware, hardware (e.g., fixed logic circuitry/fixed function circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a data processing system or NNA configured to perform any of the methods described herein, or to manufacture a data processing system or NNA comprising any apparatus described herein. An integrated circuit definition dataset may be, for example, an integrated circuit description.

Therefore, there may be provided a method of manufacturing, at an integrated circuit manufacturing system, a data processing system or NNA as described herein. Furthermore, there may be provided an integrated circuit definition dataset that, when processed in an integrated circuit manufacturing system, causes the method of manufacturing a data processing system or NNA to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

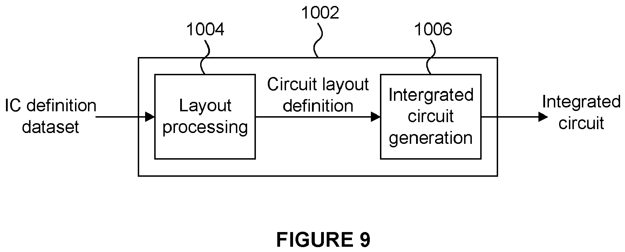

An example of processing an integrated circuit definition dataset at an integrated circuit manufacturing system so as to configure the system to manufacture a data processing system or NNA will now be described with respect to Figure 9.

Figure 9 shows an example of an integrated circuit (IC) manufacturing system 1002 which is configured to manufacture a data processing system or NNA as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a data processing system or NNA as described in any of the examples herein), process the IC definition dataset, and generate an IC according to the IC definition dataset (e.g. which embodies a data processing system or NNA as described in any of the examples herein). The processing of the IC definition dataset configures the IC manufacturing system 1002 to manufacture an integrated circuit embodying a data processing system or NNA as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a data processing system or NNA without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 9 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 9, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method (100) of resampling a first set of samples (300) using a neural network accelerator comprising fixed function hardware, the method comprising:

   receiving (110) the first set of samples (300), wherein the first set of samples (300) is arranged in a tensor extending in at least a first dimension defined in a first coordinate system;
   determining (120) a set of resampling parameters, the set of resampling parameters comprising:

   a first resampling factor $\frac{a_1}{b_1}$ for the first dimension; and
   a first offset $d_1$ for the first dimension;

   obtaining (130) at least a first number of kernels; and
   resampling (140) the first set of samples (300) to produce a second set of samples (720), based on the first resampling factor and the first offset,

   wherein:

$a_1$ and $b_1$ are integers greater than 0;
obtaining (130) the kernels comprises:

defining (132) a subset of sampling locations comprising $a_1$ sampling locations; and

generating (135) the kernels $(K_i)_{i=0,}^{a_1-1}$ , wherein the first number of kernels is greater than or equal to $a_1$, and wherein each kernel is configured for interpolating a value at a different one of the subset of sampling locations,

resampling (140) the first set of samples comprises:

convolving (150) the first set of samples (300, 600) with the kernels to produce a corresponding first number of output tensors (700) comprising a set of values, wherein the first number is an integer greater than 1; and
arranging (160) the set of values to produce the second set of samples, wherein the arranging (160) comprises performing a depth-to-space operation (162) on the output tensors (700),

the convolutions traverse the first dimension;
the second set of samples (700) is offset relative to the first set of samples in the first dimension by $d_1$;
the convolutions and depth-to-space operation are performed by the fixed function hardware (211); and
at least one of the following is true:

(A) $a_1$ does not equal $b_1$, and the convolutions are performed with a first stride in the first dimension that is greater than 1; and
(B) $d_1$ is not equal to 0.

2.  The method (100) of claim 1, wherein defining the subset of sampling locations comprises:

determining (133) X coordinates $(x_i)_{i=0}^{a_1-1}$ for a subset of the second set of samples, wherein the X coordinates define positions in the first dimension of a second coordinate system of the subset of the second set of samples, and wherein the subset of the second set of samples comprises $a_1$ samples; and
projecting (134) the X coordinates into the first coordinate system to define X coordinates of the subset of sampling locations in the first coordinate system.

3.  The method (100) of claim 2, wherein the subset of sampling locations has X coordinates

$$(x_{*i})_{i=0}^{a_1-1} = \left(\frac{b_1}{a_1}\right)i + d_1$$ in the first coordinate system.

4.  The method (100) of claim 2 or claim 3, wherein:

each of the kernels $K_i$ comprises $b_1 + 1$ elements;

the elements of the kernel $K_i$, for a given value of $i$, have values of $(k_l)_{l=0}^{b_1} =$ (1 - |$x_{*i}$ - $l$|); and
$k_l$ is set to 0 where |$x_{*i} - l$ |> 1.

5.  The method (100) of any one of the preceding claims, wherein:

the first set of samples extends in a second dimension defined in the first coordinate system;
the resampling parameters further comprise:

a second resampling factor $\dfrac{a_2}{b_2}$ for the second dimension; and
a second offset $d_2$ for the second dimension,

$a_2$ and $b_2$ are integers greater than 0;

the convolutions traverse the first dimension and the second dimension;
the second set of samples is offset from the first set of samples in the second dimension by $d_2$; and
at least one of the following is true:

(A) $a_1$ does not equal $b_1$, and the convolutions are performed with a first stride in the first dimension that is greater than 1;
(B) $a_2$ does not equal $b_2$, and the convolutions are performed with a second stride in the second dimension that is greater than 1;
(C) $d_1$ is not equal to 0; and
(D) $d_2$ is not equal to 0,

optionally wherein:

the convolutions are performed with a stride of $b_1$ in the first dimension and a stride of $b_2$ in the second dimension;
$b_1$ is greater than 1; and
$b_2$ is greater than 1,

and optionally further wherein:

the first number of kernels is equal to $a_1 \times a_2$, and
the depth-to-space operation (162) is performed with a stride of $a_1$ in the first dimension and a stride of $a_2$ in the second dimension.

6. The method (100) of claim 5, wherein obtaining the kernels comprises:

defining a subset of sampling locations comprising at least $a_1 \times a_2$ sampling locations; and

generating (135) the kernels $(K_{i,j})_{i=0,j=0}^{a_1-1,a_2-1}$, wherein the first number of kernels is greater than or equal to $a_1 \times a_2$, and wherein each kernel is configured for interpolating a value at a different one of the subset of sampling locations, and wherein defining the subset of sampling locations comprises:

determining (133) X coordinates $(x_i)_{i=0}^{a_1-1}$ for a first subset of the second set of samples, wherein the X coordinates define positions in the first dimension of a second coordinate system of the first subset of the second set of samples, and wherein the first subset of the second set of samples contains at least $a_1$ samples;

determining (133) Y coordinates $(y_j)_{j=0}^{a_2-1}$ for a second subset of the second set of samples, wherein the Y coordinates define positions in a second dimension of the second coordinate system of the second subset of the second set of samples, and wherein the second subset of the second set of samples contains at least $a_2$ samples; and

projecting (134) $a_1 \times a_2$ different combinations of the X and Y coordinates into the first coordinate system to define coordinates of the subset of sampling locations in the first coordinate system.

7. The method (100) of claim 6, wherein:

each of the kernels $K_{i,j}$ comprises $(b_1 + 1) \times (b_2 + 1)$ elements;
the elements of the kernels $K_{i,j}$, for a given value of $i$ and a given value of $j$, have values of

$$(k_{l,m})_{l=0,m=0}^{b_1,\,b_2} = (1 - |x_{*i} - l|) \times (1 - | y_{*j} - m|) \text{ ; and}$$

$k_{l,m}$ is set to 0 where $|x_{*j} - l| > 1$ and/or $|y_{*j} - m| > 1$.

8. A data processing system (200) for resampling a first set of samples, the data processing system comprising:

a neural network accelerator (210) comprising fixed function circuitry (211) configured to perform convolution operations and depth-to-space operations; and
a controller (220), configured to:

receive the first set of samples, wherein the first set of samples is arranged in a tensor extending in at least a first dimension defined in a first coordinate system;
determine a set of resampling parameters, the set of resampling parameters comprising:

a first resampling factor $\dfrac{a_1}{b_1}$ for the first dimension; and
a first offset $d_1$ for the first dimension; and

obtain at least a first number of kernels;

wherein the neural network accelerator (210) is configured to:

resample the first set of samples to produce a second set of samples based on the first resampling factor and the first offset, the resampling comprising convolving the first set of samples with the kernels to produce a corresponding first number of output tensors comprising a set of values; and
arrange the set of values to produce the second set of samples, the arranging comprising performing a depth-to-space operation on the output tensors,

wherein:

$a_1$ and $b_1$ are integers greater that 0;
the controller (220) is configured to:

define a subset of sampling locations comprising $a_1$ sampling locations; and

generate the kernels $(K_i)_{i=0}^{a_1-1}$, wherein the first number of kernels is greater than or equal to $a_1$, and wherein each kernel is configured for interpolating a value at a different one of the subset of sampling locations;

the convolutions traverse the first dimension;
the second set of samples is offset from the first set of samples in the first dimension by $d_1$;
the first number is an integer greater than 1; and
at least one of the following is true:

(A) $a_1$ does not equal $b_1$, and the convolutions are performed with a first stride in the first dimension that is greater than 1; and
(B) $d_1$ is not equal to 0.

9. The data processing system (200) of claim 8, wherein defining the set of sampling locations comprises:

determining (133) X coordinates $(x_i)_{i=0}^{a_1-1}$ for a subset of the second set of samples, wherein the X coordinates define positions in the first dimension of a second coordinate system of the subset of the second set of samples, and wherein the subset of the second set of samples comprises $a_1$ samples; and
projecting (134) the X coordinates into the first coordinate system to define X coordinates of the subset of sampling locations in the first coordinate system.

10. The data processing system (200) of any of claims 8-9, or the method (100) of any of claims 1-7, wherein each of the kernels has a size in the first dimension of at least $(b_1 + 1)$.

11. The data processing system (200) of any of claims 8-10, or the method (100) of any of claims 1-7 and 10, wherein the resampling interpolates the second set of samples using one of:

nearest neighbour interpolation;
bilinear interpolation; and
bicubic interpolation.

12. The data processing system (200) of any of claims 8-11, or the method (100) of any of claims 1-7 and 10-11, wherein:

each kernel has a size in the first dimension that is greater than or equal to both ($b_1$ + 1) and R;
R is equal to 1 when the kernels are configured to interpolate the second set of samples using nearest neighbour interpolation;
R is equal to 2 when the kernels are configured to interpolate the second set of samples using bilinear interpolation; and
R is equal to 4 when the kernels are configured to interpolate the second set of samples using bicubic interpolation.

13. The data processing system (200) of any of claims 8-12, or the method (100) of any of claims 1-7 and 10-12, wherein the resampling and the arranging are performed in a single pass through the neural network accelerator.

14. The data processing system (200) of any of claims 8-13, or the method (100) of any of claims 1-7 and 10-13, wherein the first set of samples comprises one or more of:

image data;
volumetric data; and
audio data.

15. Computer readable code configured to cause the method (100) of any of claims 1 to 7 and 10-14 to be performed when the code is run.

100

110 — Receive first set of samples

120 — Determine resampling parameters

130 — Obtain kernels

132 —
133 — Determine coordinates of second set of samples

134 — Project coordinates

Define sampling locations

135 — Generate kernels

Pad first set of samples — 131

140 — Resample

150 — Convolve first set of samples with kernels

160 — Arrange

161 — Concatenate output

162 — Perform depth-to-space operation

**FIGURE 1**

**FIGURE 2A**

FIGURE 2B

**FIGURE 2C**

300

| X11 | X12 | X13 | X14 |
|-----|-----|-----|-----|
| X21 | X22 | X23 | X24 |
| X31 | X32 | X33 | X34 |
| X41 | X42 | X43 | X44 |

Y - Dimension

X - Dimension

**FIGURE 3**

400

0    1    2    3    4

410a   411a   412a   410b   411b   412b

**FIGURE 4**

**FIGURE 5**

EP 4 439 388 A2

| X11 | X12 | X13 | X14 | 0 |
|-----|-----|-----|-----|---|
| X21 | X22 | X23 | X24 | 0 |
| X31 | X32 | X33 | X34 | 0 |
| X41 | X42 | X43 | X44 | 0 |
| 0   | 0   | 0   | 0   | 0 |

$*$

600

650

$K_{2,2}$
$K_{1,2}$
$K_{0,2}$
$K_{2,1}$
$K_{1,1}$
$K_{0,1}$
$K_{2,0}$
$K_{1,0}$
$K_{0,0}$

| 1/9 | 2/9 | 0 |
|-----|-----|---|
| 2/9 |     |   |
| 0   |     |   |

FIGURE 6

$M_{2,2}$

$M_{1,2}$

$M_{0,2}$

$M_{2,1}$

$M_{1,1}$

$M_{0,1}$

$M_{2,0}$

$M_{1,0}$

$M_{0,0}$

700

| $S_{x0,y0}$ | $S_{x3,y0}$ |
|---|---|
| $S_{x0,y3}$ | $S_{x3,y3}$ |

Concatenate →

710

Depth-to-Space

720

| $S_{x0,y0}$ | ... | $S_{x5,y0}$ |
|---|---|---|
| ... | ... | ... |
| $S_{x0,y5}$ | ... | $S_{x5,y5}$ |

**FIGURE 7**

**FIGURE 8**

1004      1002      1006

IC definition
dataset → | Layout
processing | Circuit layout
definition → | Intergrated
circuit
generation | → Integrated
circuit

**FIGURE 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2304472 A